# EUROPÄISCHE PATENTSCHRIFT

(11) **EP 2 310 756 B1**
(45) Veröffentlichungstag und Bekanntmachung des Hinweises auf die Patenterteilung: **05.12.2018**
(21) Anmeldenummer: 09765858.7
(22) Anmeldetag: 17.06.2009
(51) Int. Cl.: F24F 6/04, F28F 25/08

(54) **EINBAUELEMENT ZUM EINBAU IN EINER VORRICHTUNG ZUR BEFEUCHTUNG, REINIGUNG UND/ODER KUEHLUNG EINES FLUIDS, INSBESONDERE GASES WIE Z.B. LUFT, UND VERFAHREN ZUR HERSTELLUNG EINES EINBAUKÖRPERS MIT EINEM SOLCHEN EINBAUELEMENT**
INSERT ELEMENT FOR INSERTING IN A DEVICE FOR MOISTENING, CLEANING AND/OR COOLING A FLUID, IN PARTICULAR A GAS, SUCH AS, FOR EXAMPLE, AIR, AND A METHOD FOR PRODUCING AN INSERT BODY WITH SUCH A INSERT ELEMENT
ÉLÉMENT INTÉGRABLE À INTÉGRER DANS UN DISPOSITIF D'HUMIDIFICATION, DE NETTOYAGE ET/OU DE REFROIDISSEMENT D'UN FLUIDE, EN PARTICULIER D'UN GAZ COMME L'AIR PAR EXEMPLE, ET PROCÉDÉ DE FABRICATION D'UN CORPS INTÉGRABLE AVEC UN TEL ÉLÉMENT INTÉGRABLE

(30) Priorität: 18.06.2008 DE 102008029054
(43) Veröffentlichungstag der Anmeldung: 20.04.2011
(73) Patentinhaber: Hewitech GmbH & Co. KG, 48607 Ochtrup (DE)
(72) Erfinder: DIRKSKOETTER, Frank, 48607 Ochtrup (DE); HEWING, Bernd, 48607 Ochtrup (DE)
(74) Vertreter: dompatent von Kreisler Selting Werner - Partnerschaft von Patent- und Rechtsanwälten mbB
(86) Internationale Anmeldenummer: PCT/EP2009/057508
(87) Internationale Veröffentlichungsnummer: WO 2009/153278

(56) Entgegenhaltungen:
- DE-A1- 1 601 131
- DE-A1- 2 840 317
- DE-A1- 19 819 945
- DE-B3- 10 325 723
- DE-U1-202006 018 753
- US-A- 5 312 464

## Beschreibung

Die Erfindung betrifft ein Einbauelement zum Einbau in eine Vorrichtung zur Befeuchtung, Reinigung und/oder Kühlung eines Fluids, insbesondere Gases wie z.B. Luft. Ferner betrifft die Erfindung ein Verfahren zur Herstellung eines Einbaukörpers mit einem solchen Einbauelement.

Derartige Vorrichtungen sind auch als Verdunstungsbefeuchter und Stoffaustauscher bekannt, die unter anderem zur Luftbefeuchtung und gleichzeitigen Luftkühlung beispielsweise in Wohn- oder Bürogebäuden, Lagerhallen, Stallungen, Gewächshäusern und anderen Räumen oder auch von technischen Anlagen, beispielsweise für die Reinigung und insbesondere Entstaubung von Zu- oder Abluft und für reaktive Gas- oder Luftreinigungen (insbesondere Entfernung von Geruchsstoffen wie beispielsweise Ammoniak aus der Stallabluft) eingesetzt werden. Die Abkühlung eines Gases mit Hilfe derartiger Vorrichtungen erfolgt nach dem Prinzip der adiabatischen Kühlung (Verdunstungskühlung).

Die bekannten Vorrichtungen der vorstehend genannten Arten weisen Einbauelemente auf, die über eine Vielzahl von Plattenelementen bzw. Materiallagen verfügen, welche zumeist gewellt sind, so dass bei dichter Anlage benachbarter Plattenelemente sich kreuzende Kanäle entstehen, durch die über eine Eingangsseite der Vorrichtung das Gas einströmt, die Vorrichtung durchströmt und an einer gegenüberliegenden Ausgangsseite wieder herausströmt. Die Eingangs- und Ausgangsseiten der Vorrichtung werden durch gegenüberliegende Ränder der einzelnen nebeneinanderliegenden Plattenelemente gebildet. Somit strömt also das Gas parallel zur Erstreckung der Plattenelemente zwischen deren betreffenden Rändern und zwischen den Plattenelementen.

Die Einbauelemente der vorstehend genannten Art werden mit Flüssigkeit, insbesondere Wasser, benetzt, so dass das zu behandelnde Gas an benetzten Flächen der Plattenelemente entlang strömt. Dabei ist es wünschenswert, dass die Benetzungsflüssigkeit eine möglichst große Oberfläche bildet und sich über einen längeren Zeitraum in der Vorrichtung bzw. an den Plattenelementen hält.

Bekannte Vorrichtungen der vorstehend genannten Arten weisen geschlossene Materiallagen bzw. Plattenelemente aus Kunststoff oder Papier auf, die miteinander verschweißt oder verklebt sind. Plattenelemente aus Papier haben den Nachteil, dass sich die mit ihnen aufgebauten vom Gas durchströmbaren Körper nicht reinigen lassen, ohne dass man Gefahr läuft, die Papier-Plattenelemente zu zerstören. Diesbezüglich sind Plattenelemente aus Kunststoff zu bevorzugen. Beide bekannten Systeme jedoch haben ferner den Nachteil, dass es noch nicht zu einem optimalen Austausch des Gases mit der Feuchtigkeit kommt, was sich nachteilig auf die Effizienz der Gasbehandlung auswirken kann. Auch stellen diese Vorrichtungen einen vergleichsweise hohen Strömungswiderstand dar, was ebenfalls nicht wünschenswert ist.

Beispiele für die zuvor genannten Vorrichtungen sind in US-A-3,262,682, US-A-3,415,502, US-B-6,544,628, DE-A-198 19 945, DE-A-26 32 020, DE-A-16 79 515, WO-A-2006/103028 und DE-U-20 2006 018 753 beschrieben.

Vorrichtungen der vorstehend genannten Art werden aber nicht nur für die Gaskühlung, sondern auch für die Kühlung von Flüssigkeiten wie beispielsweise Wasser eingesetzt. Ein Beispiel für eine derartige Anwendung ist ein Einbauelement für einen Kühlturm eines Kraftwerks, wobei auf die Plattenelementkörper, die im Kühlturm eingebaut sind, abzukühlende Flüssigkeit aufgesprüht wird, die dann durch einen durch den Kamin entstehenden Luftstrom abgekühlt wird.

Bisher bestehen die Einbaukörper der bekannten Vorrichtungen aus aufeinanderliegenden Plattenelementen, aus denen quaderförmige Blöcke als Plattenkörper hergestellt werden. Diese Blöcke werden dann nebeneinander bzw. übereinander gestapelt angeordnet. Bei größeren Anlagen kann dies zu Instabilitäten des Gebildes aus übereinanderstehenden Plattenelementkörpern führen.

DE-A-28 40 317 beschreibt einen Einbau für einen Verdunstungskühler, der aus mehreren Paketen bzw. Körpern mit jeweils übereinander gestapelten Plattenelementen besteht. Dabei bilden die seitlich aneinanderliegenden Außenseiten zweier benachbarter Pakete jeweils eine Kammstruktur, bei der jedes zweite Plattenelement gegenüber den dazwischenliegenden Plattenelementen übersteht. Die derart gestalteten Plattenelementstapel werden zunächst getrennt voneinander hergestellt, woraufhin die so erstellten Stapel ineinandergeschoben werden. Der Zweck dieser Verfugung ist das Getrennthalten von feuchter und trockener Luft voneinander beim Übergang von einem Paket bzw. Plattenelementstapel zum nächsten Paket bzw. Plattenelementstapel. Das zu kühlende Gas durchströmt also die Trennungsebene benachbarter Pakete bzw. Plattenelementstapel.

Aufgabe der Erfindung ist es, ein Einbauelement zum Einbau in einer Vorrichtung zur Befeuchtung, Reinigung und/oder Kühlung eines Fluids, insbesondere eines Gases wie beispielsweise Luft zu schaffen, sowie ein Herstellungsverfahren für einen solchen Einbaukörper, wobei der Plattenelementkörper auch bei großen Dimensionen selbststabilisierend ausgeführt ist.

Diese Aufgabe wird durch ein Verfahren zum Zusammenbau eines Einbaukörpers mit einem Einbauelement gemäß Anspruch 1 und durch ein nach diesem Verfahren erhältliches Einbauelement gemäß Anspruch 8 gelöst. Die abhängigen Ansprüche betreffen einzelne Ausgestaltungen der Erfindung.

Nach der Erfindung besteht der Einbaukörper pro Lage aus mehreren mit ihren Rändern nebeneinanderliegenden Plattenelementen, wobei die Plattenelemente benachbarter Lagen die gegenüberliegenden Ränder der Platten der Nachbarlage überdecken. Auf diese Weise entsteht ein Plattenelementverbund, und zwar nicht notwendigerweise lediglich in einer Dimension (beispielsweise Breitenerstreckung der Lagen), sondern ggf. auch in zwei Dimensionen (nämlich Breiten- und Längenerstreckung der Lagen).

Die Plattenelemente des erfindungsgemäßen Einbauelements sind also bezogen auf zwei benachbarte Lagen versetzt zueinander angeordnet, so dass ein stabiler Verbund entsteht. Dieser Verbund wird noch dadurch verstärkt, dass die Plattenelemente benachbarter Lagen miteinander durch Steck- oder Rastverbindungen oder durch Zapfen-Loch- oder Nietverbindungen mit Kalt- oder Warmverformung des den Zusammenhalt herstellenden Materials gegen Scherkräfte aneinander fixiert sind.

In vorteilhafter Weiterbildung der Erfindung ist vorgesehen, dass die Plattenelemente jeweils Längs- und Querrandabschnitte aufweisen und dass benachbarte Plattenelemente einer Lage jeweils mit Ihren Längsrändern und/oder mit ihren Querrändern aneinander gegenüberliegend angeordnet sind. Hierbei ist zweckmäßigerweise ferner vorgesehen, dass der Einbaukörper in Richtung der aufeinanderfolge der Lagen verlaufende Zusammenhaltestangen aufweist, die sich durch aneinanderliegende Plattenelemente der Lagen erstrecken. Hierdurch entsteht eine kompakte Einheit, wobei pro Einbaukörper mehrere über den Einbaukörper verteilt angeordnete Zusammenhaltestangen vorgesehen sein können.

Die durch die gegeneinander versetzt angeordneten Platten hergestellten Einbaukörper weisen zweckmäßigerweise eine Quaderform auf. Ihre Seitenflächen werden also durch die außenliegenden Ränder der Plattenelemente gebildet, während die Ober- und Unterseiten der Einbaukörper durch die Plattenelemente der beiden Außenlagen gebildet sind. Die außenliegenden Ränder der Plattenelemente der einzelnen Lagen können dabei miteinander fluchten, also auf jeder Außenseite des Einbaukörpers jeweils in gemeinsamen Ebenen angeordnet oder aber auch versetzt zueinander angeordnet sein und somit eine der jeweiligen Einbausituation des Einbaukörpers angepasste Form aufweisen. So ist es z.B. möglich, dass der Körper eine treppenstufenförmige Gestalt aufweist.

Wird ein derartiger Einbaukörper zur Gaskühlung nach dem Prinzip der adiabatischen Kühlung eingesetzt, so werden die Strömungseingangs- und -ausgangsseiten des Einbau- bzw. Kühlkörpers von zwei gegenüberliegenden Seitenflächen des Kühlkörpers gebildet. Die Flüssigkeit wird auf die Oberseite des Kühlkörpers gegeben (insbesondere gesprüht) und fließt durch diesen quer zur Gasströmung und unter Benetzung der perforierten Plattenelemente (Gaskühlung nach Kreuzstromprinzip). Bei Einsatz des Kühlkörpers in einem Kühlturm funktioniert die Wasserkühlung nach dem Gegenstromprinzip, indem die zu kühlende Flüssigkeit wiederum von oben auf den Kühlkörper gegeben wird und das Gas von der Unterseite bis zur Oberseite des Kühlkörpers durch diesen strömt.

Insbesondere zweckmäßig ist es, wenn die Plattenelemente perforiert sind. In diesem Zusammenhang bietet es sich an, als Plattenelemente Gittermatten zu verwenden. Bei dieser Ausgestaltung der Erfindung ist der vom zu behandelnden Gas durchströmbare Einbaukörper, welcher mit einer Flüssigkeit, insbesondere Wasser, benetzbar ist, durch eine Vielzahl von gewellten Plattenelementen aus Kunststoff mit Perforationen aufgebaut. Auf Grund dieser Perforationen kann ein Gasaustausch zwischen benachbarten Plattenelementen durch diese hindurch erfolgen. Dies verbessert die Stoffaustauschrate zwischen Gas und Flüssigkeit und reduziert den Strömungswiderstand. Der erfindungsgemäß vorgeschlagene Körper ist also dreidimensional durchströmbar. Auf Grund der perforierten Plattenelemente kommt es zu örtlichen Verwirbelungen des den Einbaukörper durchströmenden Gases, was den Austausch des Gases mit der Flüssigkeit verbessert.

Der erfindungsgemäße Einbaukörper dient insbesondere der adiabatischen Kühlung von Stallungen oder Gewächshäusern zuzuführender Luft, da durch die perforierten Plattenelemente eine vergrößerte Menge an Flüssigkeit im Körper unter Bildung einer vergrößerten Oberfläche und über einen längeren Zeitraum gehalten werden kann.

Wie bereits oben erwähnt, ist es besonders zweckmäßig, wenn die Plattenelemente als Gittermatten ausgebildet sind, die Gitterstäbe aufweisen, zwischen denen sich die Perforationen in Form der Freiräume zwischen benachbarten Gitterstäben bilden. An den Gitterstäben hält sich die Benetzungsflüssigkeit unter Bildung einer recht großen Oberfläche, was eine vergrößerte Kontaktfläche des Gases mit der Flüssigkeit zur Folge hat.

Alternativ zu Gittermatten können die Plattenelemente auch als Folienelemente ausgebildet sein, in denen die Perforationen beispielsweise durch Ausstanzen ausgebildet sind.

Die gewellten Plattenelemente weisen benachbarte Erhebungen und Vertiefungen auf, die beispielsweise in Form von Tälern und Bergen ausgebildet sind. Die Seitenflanken zwischen einer Vertiefung und einer Erhebung weisen dabei zweckmäßigerweise die Perforationen auf. Die Erhebungen und Vertiefungen verlaufen vorzugsweise schräg zu den gegenüberliegenden, die Eingangs- und Ausgangsseiten des benetzbaren Einbaukörpers bildenden Ränder der Plattenelemente. Alternativ können sie zwischen diesen Rändern auch zickzackförmig oder in anderer von einer geradlinigen Erstreckung abweichenden Weise verlaufen.

Als Kunststoffmaterial für die Plattenelemente eignen sich Polyolefine und insbesondere Thermoplaste, wie beispielsweise PP oder PE. Anstelle von Kunststoffmaterial können die Plattenelemente aber auch aus Papier oder Pappe bestehen.

Wie bereits oben erwähnt, lässt sich der erfindungsgemäße Einbaukörper sozusagen "endlos" fertigen, in dem mehrere Plattenelemente übereinander und nebeneinander versetzt an einen Plattenelementstapel aus ebenfalls nebeneinander und mit Versatz übereinander angeordneten Plattenelementen angefügt werden. Hierdurch entsteht ein in der Höhe vorgebbarer Plattenelementstapel, der durch "seitlichen" Anbau in seiner Breite bzw. Tiefe erweiterbar ist, so dass durch Schneiden dieses in der Breite bzw. der Tiefe anwachsenden Plattenelementstapels einzelne Plattenelementblöcke von gewünschter Länge erhältlich sind. Die zuvor beschriebene "Endlos"-Fertigung lässt sich manuell oder maschinell realisieren,

In vorteilhafter Weiterbildung der Erfindung ist vorgesehen, dass zwischen zwei benachbarten, übereinander angeordneten Plattenelementen in dem der Stützfläche zugewandten unteren Bereich des Plattenelementstapels sowie in dem der Stützfläche abgewandten oberen Bereich des Plattenelementstapels Versteifungsfolienstreifen eingelegt werden.

Zweckmäßigerweise werden die Versteifungsfolienstreifen während des Aufbau des Plattenelementstapels zwischen den beiden Plattenelementen jeweils zweier Paare von versetzt übereinander angeordneten Plattenelementen eingelegt

Bei einer ersten Variante der Erfindung werden jeweils einzelne Plattenelemente übereinander und versetzt nebeneinander angeordnet. Alternativ werden jeweils mehrere Plattenelemente fluchtend übereinander zu Plattenelementgruppen und die sich so ergebenden Plattenelementgruppen übereinander und nebeneinander versetzt zur Bildung des Plattenelementstapels angeordnet.

Als für die Endlos-Fertigung besonders vorteilhaft hat sich herausgestellt, wenn die Plattenelemente zur Bildung eines treppenförmigen Versatzes des Plattenelementstapels versetzt angeordnet werden. Alternativ dazu können die Plattenelemente oder Gruppen von Plattenelementen wechselweise versetzt angeordnet werden, so dass über die Höhe des Plattenelementstapels betrachtet jedes zweite Plattenelement oder jede zweite Gruppe von Plattenelementen zueinander fluchtend angeordnet sind.

Die Erfindung wird nachfolgend anhand von Ausführungsbeispielen und unter Bezugnahme auf die Zeichnung näher erläutert. Im Einzelnen zeigen dabei:
- Fig. 1: eine perspektivische Ansicht eines aus mehreren nebeneinander angeordneten Lagen mit jeweils mehreren übereinanderstehenden Plattenelemente aufgebauten Einbaukörpers,
- Fig. 2: eine Seitenansicht des Körpers gemäß Fig. 1,
- Fig. 3: eine vergrößerte Detailansicht gemäß III der Fig. 2,
- Fig. 4: eine perspektivische detailliertere Ansicht eines Teils des blockförmigen Kühlkörpers gemäß Fig. 1, wobei der Einbaukörper eingesetzt ist in einer Vorrichtung zur adiabatischen Kühlung von Luft und teilweise aufgebrochen dargestellt ist,
- Fig. 5: eine Draufsicht auf ein gewelltes Plattenelement aus Kunststoff mit durch die Strukturen erzeugten Perforationen, wobei der Einbaukörper gemäß Fig. 4 aus einer Vielzahl derartiger aneinanderliegender Plattenelemente aufgebaut ist,
- Fig. 6: ein weiteres Ausführungsbeispiel eines pro Lage in zwei Dimensionen mit versetzten Plattenelementen versehenen Einbaukörpers,
- Fign. 7 bis 10: Seitenansichten eines in seiner Breite anwachsenden Plattenelementstapels in verschiedenen Phasen seines Aufbaus,
- Fig. 11: eine schematische Darstellung zweier Verarbeitungsstationen des Plattenelementstapels,
- Fig. 12: eine Ansicht auf die beiden Weiterverarbeitungseinheiten in Richtung des Pfeils XII der Fig. 11 und
- Fign. 13 bis 15: weitere Beispiele für die Anordnung mehrerer Plattenelemente zur Bildung von in ihren Breiten anwachsenden Plattenelementstapeln.

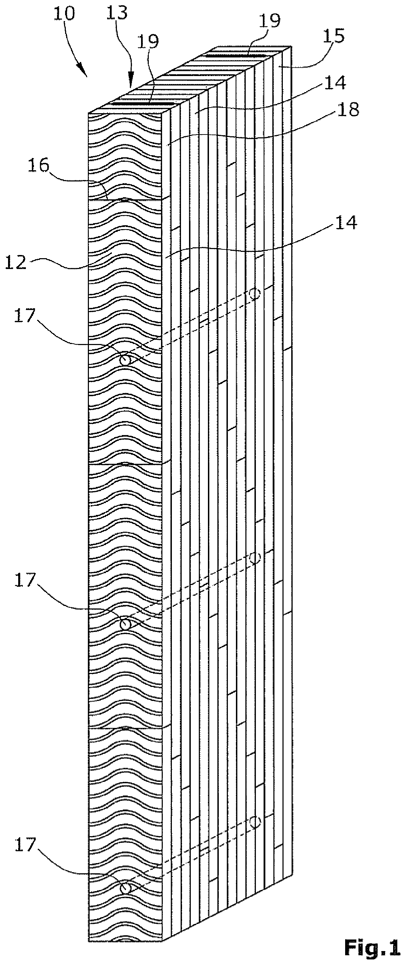

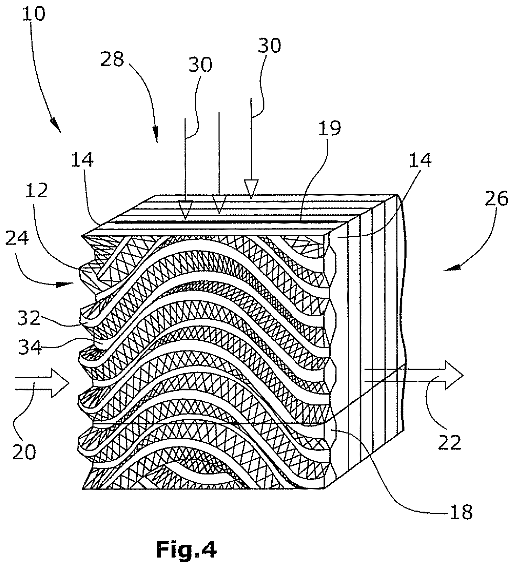

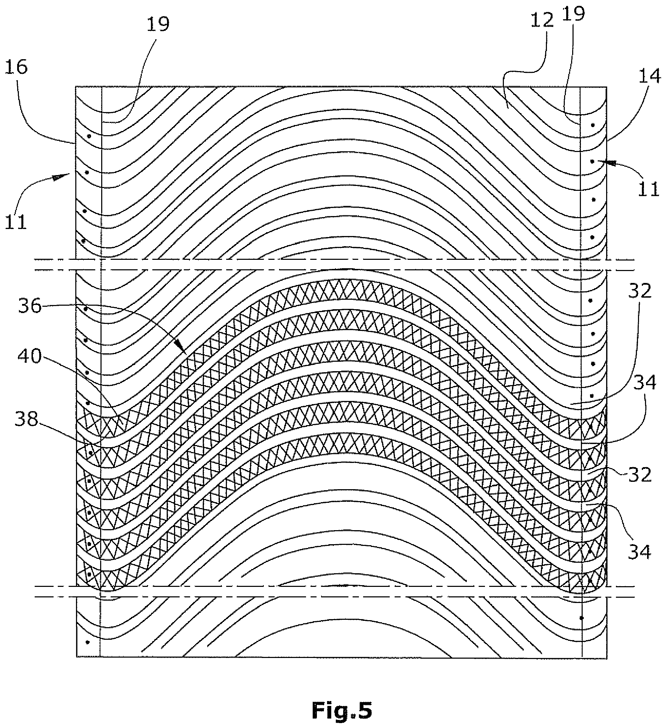

Fig. 1 zeigt einen in diesem Ausführungsbeispiel als Kühlkörper 10 eingesetzten Einbaukörper aus einzelnen gewellten Kunststoff-Plattenelementen 12, die nebeneinander und übereinanderliegend sowie hochkant angeordnet sind. Der Kühlkörper 10 umfasst dabei mehrere Lagen 13 derartiger Plattenelemente 12, wobei die Plattenelemente 12 pro Lage 13 übereinander (auf die Ausrichtung des Kühlkörpers 10 gemäß Fig. 1 bezogen) angeordnet sind. Jedes Plattenelement weist zwei gegenüberliegende Längsränder 14 sowie zwei Querränder 16 auf, die aufgrund der gewellten Strukturen der Kunststoff-Plattenelemente 12 ebenfalls wellenförmig verlaufen. Werden nun zwei derartige Plattenelemente 12 in benachbarten Lagen 13 des Kühlkörpers 10 gegeneinandergelegt, so dass sich ihre Wellungen kreuzen, so entstehen Öffnungen 18, an die sich den Kühlkörper 10 durchziehende Kanäle anschließen. Hierauf wird im Zusammenhang mit den Fign. 4 und 5 noch mehr eingegangen.

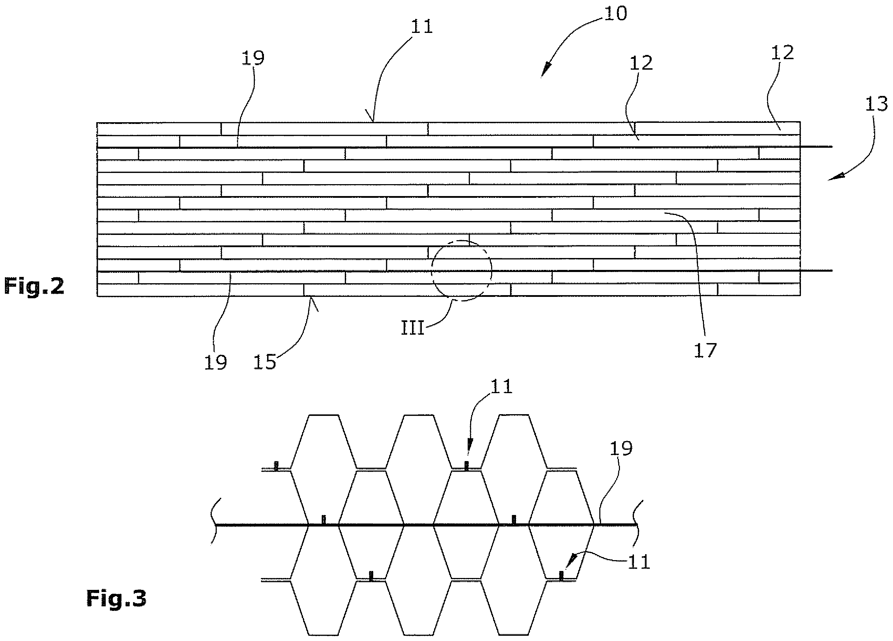

Wie insbesondere auch anhand der Fign. 2 und 3 zu erkennen ist, entsteht durch den bezogen auf zwei benachbarte Lagen versetzten Aufbau der Plattenelemente 12 ein stabiler Verbund, dem zusätzliche Stabilität durch miteinander zusammenwirkende Loch-Zapfen-Verbindungen 11 der Plattenelemente 12 benachbarter Lagen 13 verliehen werden kann. Zusätzlich kann der Kühlkörper 10 von seiner Oberseite 11 bis zu seiner Unterseite 15 von Zusammenhalteelementen 17 in Stangenform zusammengehalten sein. Ferner weist der Kühlkörper 10 Versteifungsfolienstreifen 19 auf, die zwischen den Plattenelementen 12 zweier Paare benachbarter Plattenelemente 12 angeordnet sind und sich zwischen den längs der Ränder 14 der Plattenelemente 12 befindlichen Loch-Zapfen-Verbindungen 11 erstrecken.

Anhand der Fign. 4 und 5 soll nachfolgend auf die Funktionsweise eines Kühlkörpers 10 gemäß der Fign. 1 bis 3 in seiner Anwendung zur adiabatischen Kühlung von Luft eingegangen werden.

Wie bereits oben erwähnt, entstehen durch die übereinanderliegenden Plattenelemente 12 jeweils zweier benachbarter Lagen 13 Öffnungen 18, an die sich den Kühlkörper 10 durchziehende Kanäle anschließen. Durch diese Öffnungen 18 und Kanäle strömt nun beispielsweise zu kühlende Luft (siehe die Strömungspfeile 20,22), die den Körper 10 von dessen Strömungseingangsseite 24 bis zu dessen Strömungsausgangsseite 26 durchströmt. Dabei sind die Öffnungsstrukturen auf diesen beiden Seiten 24,26 durch die gewellten, gegenüberliegenden Ränder 14,16 der einzelnen Plattenelemente 12 gebildet.

Zur Benetzung des Kühlkörpers 10 mit beispielsweise Wasser wird dieses auf die Oberseite 28 des Kühlkörpers 10 aufgebracht (siehe die Pfeile 30). Das Wasser fließt an den Plattenelementen 12 entlang nach unten und bildet an den Plattenelementen 12 große Oberflächen aus, entlang derer das zu kühlende Gas strömt, um sich dabei adiabatisch abzukühlen.

Fig. 4 zeigt eine Draufsicht auf ein Plattenelement 12 aus beispielsweise PP. Das Plattenelement 12 ist mit in diesem Ausführungsbeispiel wellenförmig verlaufenden Erhebungen 32 und Vertiefungen 34 versehen, die alternierend nebeneinanderliegend angeordnet sind. Die Seitenflanken 36 zwischen den Vertiefungen 34 und Erhebungen 32 sind dabei von einzelnen Gitterstäben 38 gebildet, zwischen denen Freiräume ausgebildet sind, die dem Plattenelement 12 Perforationen 40 verleihen. Durch diese Perforationen 40 kann es zu einem Gas- und Flüssigkeitsaustausch zwischen benachbarten Plattenelementen 12 kommen, was die Effektivität der adiabatischen Kühlung verbessert. Die Gitterstäbe 38 sorgen für eine Oberflächenvergrößerung der Flüssigkeit und damit für eine bessere Interaktion der Luft und der Flüssigkeit. Schließlich reduziert sich der Strömungswiderstand des Kühlkörpers 10. All diese Faktoren wirken sich auf die Verbesserung der Leistungsmerkmale des Kühlkörpers 10 aus,

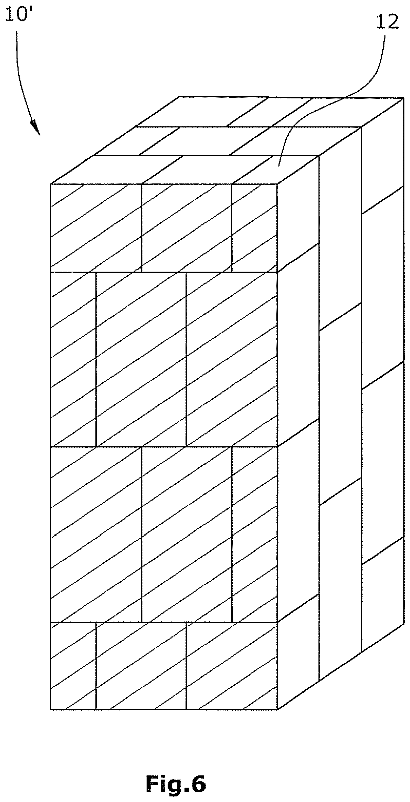

Fig. 6 zeigt ein weiteres Ausführungsbeispiel eines Kühlkörpers 10'. Diejenigen Bestandteile des Kühlkörpers 10', die denen des Kühlkörpers 10 gemäß den Fign. 1 und 2 entsprechen, sind in Fig. 6 mit den gleichen Bezugszeichen versehen.

Der Kühlkörper 10' gemäß Fig. 6 weist wiederum mehrere Lagen 13 von gewellten Kunststoff-Plattenelementen 12 auf, wobei diese Plattenelemente 12 nunmehr pro benachbarter Lage 13 nicht nur in Höhenerstreckung des Kühlkörpers 10', sondern auch in dessen Breitenerstreckung jeweils gegeneinander versetzt angeordnet sind. Somit entsteht ein Verbund von Plattenelementen 12' sowohl in Breiten- als auch in Höhenerstreckung des Kühlkörpers 10', was zusätzlich Stabilität mit sich bringt und es wie beim Kühlkörper 10 gemäß den Fign. 1 und 2 ermöglicht, großvolumige als einteilige Körper handzuhabende Gebilde aufzubauen, die über wesentlich größere Stabilität verfügen, als wenn diese Gebilde durch einzelne quaderförmige Plattenkörper aufgebaut wären, bei denen jede Lage aus lediglich einem Plattenelement besteht.

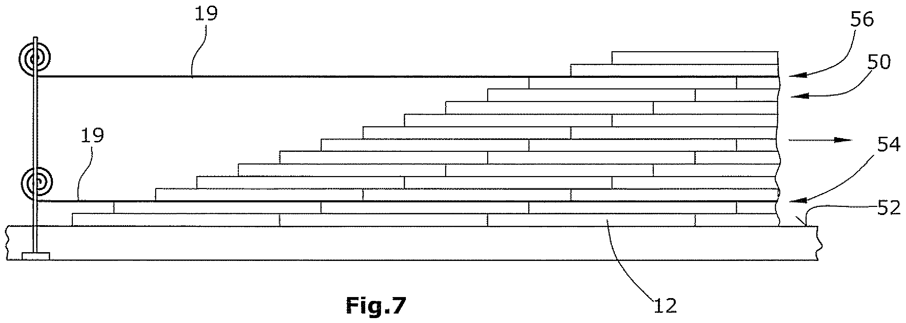

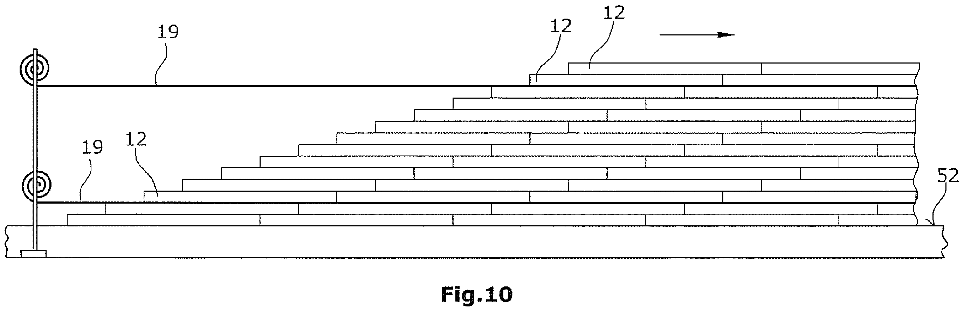

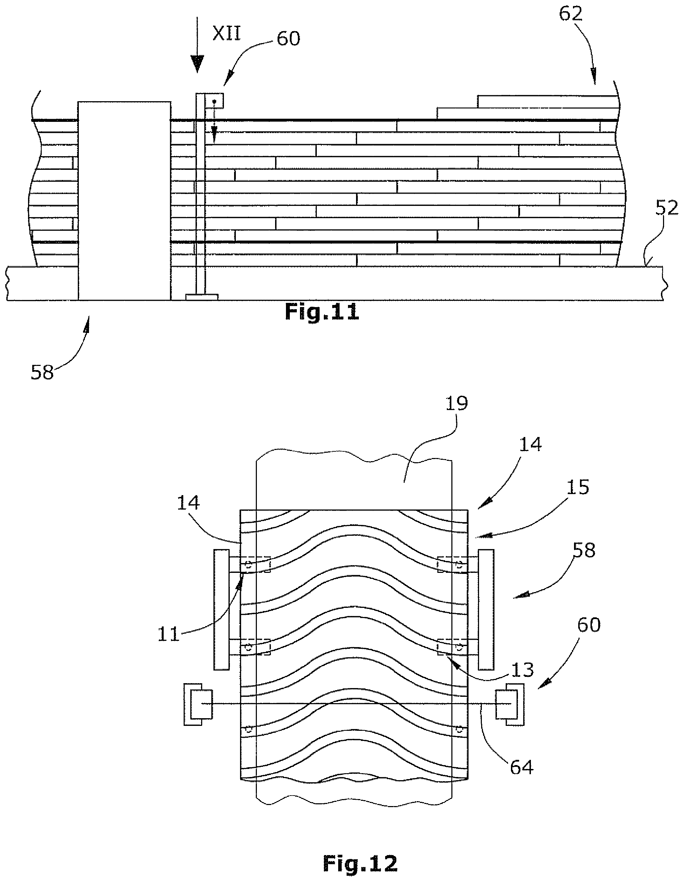

In den Fign. 7 bis 12 sind die verschiedenen Phasen beim Aufbau eines Plattenelementstapels 50 gezeigt, der durch Ablängen zu einzelnen Blöcken geschnitten wird, die dann beispielsweise den Kühlkörper 10 gemäß den Fign. 1 bis 5 bilden.

Wie insbesondere anhand von Fig. 7 zu erkennen ist, werden einzelne Plattenelemente 12 nebeneinander und versetzt übereinander auf einer Stützfläche 52 zu einem in diesem Ausführungsbeispiel treppenförmigen Stapel 50 angeordnet. Im unteren Bereich 54 wird zwischen zwei benachbarte Lagen 13 von nebeneinander angeordneten Plattenelementen 12 ein Versteifungsfolienstreifen 19 eingelegt. Ein zweiter Versteifungsfolienstreifen 19 wird zwischen die benachbarten Lagen 13 aus nebeneinander angeordneten Plattenelementen 12 in einem oberen Bereich 56 des Plattenelementstapels 50 angeordnet. Der Plattenelementstapel 50 wird bezogen auf die Darstellung in Fig. 7 nach rechts bewegt, um links vom Stapel weitere Plattenelemente 12 anzulegen.

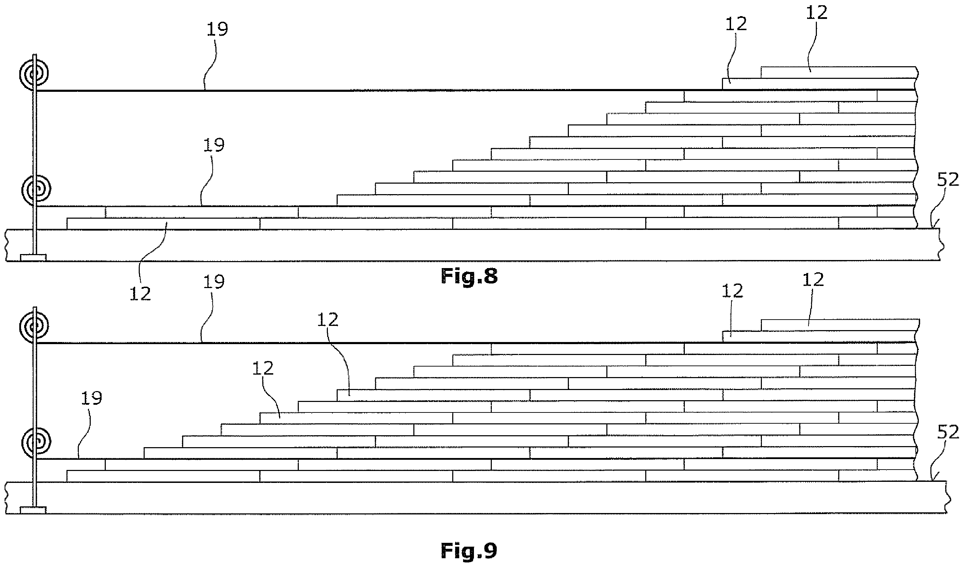

Wie in den Fign. 8 bis 10 gezeigt, wird nun durch seitliches Anlegen an den treppenförmigen Versatz des Plattenelementstapels 50 dieser in seiner Breite vergrößert. Hierzu werden zunächst in einer ersten Phase unterhalb des unteren Versteifungsfolienstreifens 19 zwei Plattenelemente 12 nacheinander übereinander und versetzt zueinander angeordnet, wobei diese Platten an die benachbarten Plattenelemente 12 des zu diesem Zeitpunkt bereits erstellten treppenförmigen Plattenelementstapels 50 angelegt werden (Fig. 8). Alsdann werden im Bereich zwischen den beiden Versteifungsfolienstreifen 19 weitere Plattenelemente 12 versetzt übereinandergelegt und seitlich an den treppenförmigen Versatz des Plattenelementstapels 50 angefügt (siehe Fig. 9). Anschließend werden in diesem Ausführungsbeispiel zwei weitere Plattenelemente 12 als obere Lagen des Plattenelementstapels 50 angeordnet, so dass dieser Plattenelementstapel 50 über seine ganze Höhe letztendlich um die Länge eines Plattenelements 12 verbreitert worden ist. Alsdann wird der so in seiner Breite angewachsene Plattenelementstapel 50 bezogen auf die Fign. 8 bis 10 nach rechts verschoben, so dass links vom Plattenelementstapel 50 wiederum Platz für das Anlegen eines oder mehrerer Plattenelemente nebeneinander gegeben ist.

In einer bezogen auf die Darstellung der Fign. 8 bis 10 rechts vom Plattenelementstapel 50 angeordneten ersten Verarbeitungsstation 58 werden nun die an den Längsrändern 14 der Plattenelemente 12 angeordneten Zapfen-Loch-Verbindungen 11 erzeugt, indem die Zapfen gegebenenfalls unter Einwirkung von Wärme plastisch verformt und nach Art von Nieten ausgebildet werden (siehe Fig. 3). Hierdurch wird der Zusammenhalt der Lagen 13 übereinander angeordneter Plattenelemente 12 realisiert. Ferner werden hierdurch auch die lediglich lose zwischen jeweils benachbarten Plattenelementen 12 angeordneten Versteifungsfolienstreifen 19 fixiert.

In einer in Fertigungsrichtung stromab der ersten Verarbeitungseinheit 58 angeordneten zweiten Verarbeitungseinheit 60 wird dann der Plattenelementstapel 50 in einzelne Blöcke 62 geschnitten, was in diesem Ausführungsbeispiel durch einen Heizdraht 64 realisiert wird, grundsätzlich aber auch durch einen Sägevorgang oder anderen Trennvorgang erfolgen kann.

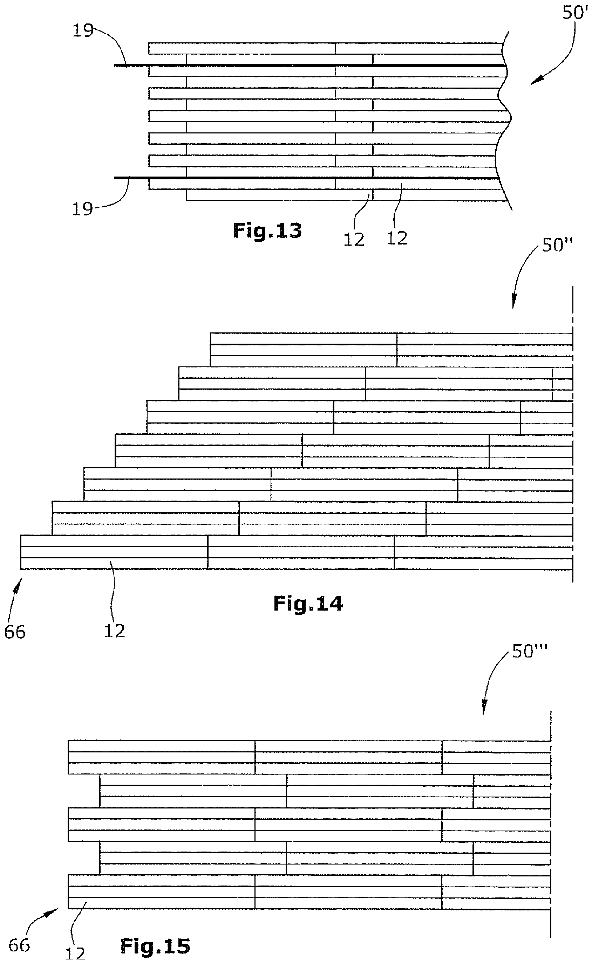

In Fig. 13 ist angedeutet, in welcher beispielhaften alternativen Form ein in der Breite anwachsender Plattenelementstapel 50' aus einzelnen Plattenelementen 12 aufgebaut sein kann. In diesem Ausführungsbeispiel ist jedes zweite übereinander angeordnete Plattenelement 12 zueinander fluchtend ausgerichtet.

In den Fign. 14 und 15 sind den Ausführungsbeispiel gemäß den Fign. 7 bis 10 bzw. 13 entsprechende Plattenelementstapel 50" und 50"' gezeigt, wobei der Unterschied zu den zuvor genannten Ausführungsbeispielen darin besteht, dass gemäß den Fign. 14 und 15 beim Aufbau der Plattenelementstapel 50" und 50'" nicht einzelne Plattenelemente 12 nebeneinander und versetzt zueinander angeordnet werden, sondern stets Gruppen 66 aus in diesen Ausführungsbeispielen jeweils drei Plattenelementen 12 fluchtend übereinander angeordnet sind, um dann diese Gruppen 66 von Plattenelementen 12 zur Fertigung von Blöcken übereinander und versetzt zueinander anzuordnen.

## Patentansprüche

1. Verfahren zum Zusammenbau eines Einbaukörpers für eine Vorrichtung zur Befeuchtung, Reinigung und/oder Kühlung eines Fluids, insbesondere Gases wie z.B. Luft, bei dem
- mehrere gewellte Folien- oder Gitter-Plattenelemente (12) mit Erhebungen und Vertiefungen auf einer Stützfläche (52) zur Bildung eines Plattenelementstapels (50,50',50",50'") aus nebeneinander und mit Versatz übereinander angeordneten Plattenelementen (12) positioniert werden,
- an den derart aufgebauten Plattenelementstapel (50,50',50",50"') von unten und auf der Stützfläche beginnend weitere Plattenelemente (12) nacheinander an die Plattenelemente (12) des bis dahin erstellten Plattenelementstapels (50,50',50",50"') angelegt werden und
- der Plattenelementstapel (50,50',50",50"') aus nebeneinander und versetzt übereinander angeordneten Plattenelementen (12) zu Plattenelementblöcken (62) von gewünschter Länge geschnitten wird.

2. Verfahren nach Anspruch 1, **dadurch gekennzeichnet, dass** zwischen zwei benachbarten, übereinander angeordneten Plattenelementen (12) in dem der Stützfläche (52) zugewandten unteren Bereich des Plattenelementstapels (50,50',50",50"') sowie in dem der Stützfläche (52) abgewandten oberen Bereich des Plattenelementstapels (50,50',50",50"') Versteifungsfolienstreifen (19) eingelegt werden.

3. Verfahren nach Anspruch 1 oder 2, **dadurch gekennzeichnet, dass** die Versteifungsfolienstreifen (19) während des Aufbau des Plattenelementstapels (50,50',50",50"') zwischen den beiden Plattenelementen (12) jeweils zweier Paare von versetzt übereinander angeordneten Plattenelementen (12) eingelegt werden.

4. Verfahren nach einem der Ansprüche 1 bis 3, **dadurch gekennzeichnet, dass** jeweils einzelne Plattenelemente (12) übereinander und versetzt nebeneinander angeordnet werden.

5. Verfahren nach einem der Ansprüche 1 bis 3, **dadurch gekennzeichnet, dass** jeweils mehrere Plattenelemente (12) fluchtend übereinander zu Plattenelementgruppen und die sich so ergebenden Plattenelementgruppen übereinander und nebeneinander versetzt zur Bildung des Plattenelementstapels (50,50',50",50"') angeordnet werden.

6. Verfahren nach einem der Ansprüche 1 bis 5, **dadurch gekennzeichnet, dass** die Plattenelemente (12) zur Bildung eines treppenförmigen Versatzes des Plattenelementstapels (50,50',50",50"') versetzt angeordnet werden.

7. Verfahren nach einem der Ansprüche 1 bis 6, **dadurch gekennzeichnet, dass** die Plattenelemente (12) oder Gruppen von Plattenelementen (12) wechselweise versetzt angeordnet werden, so dass über die Höhe des Plattenelementstapels (50,50',50",50"') betrachtet jedes zweite Plattenelement (12) oder jede zweite Gruppe von Plattenelementen (12) zueinander fluchtend angeordnet sind.

8. Einbauelement zum Einbau in eine Vorrichtung zur Befeuchtung, Reinigung und/oder Kühlung eines Fluids, insbesondere Gases wie z.B. Luft,
- einem mit Flüssigkeit, insbesondere Wasser, benetzbaren Einbaukörper (10) erhalten durch ein Verfahren gemäß einem der vorhergehenden Ansprüche, der von einem Gas, insbesondere Luft, durchströmbar ist und eine Strömungseingangsseite sowie eine Strömungsausgangsseite aufweist und zwischen diesen Seiten mit Bereichen versehen ist, die von der Flüssigkeit benetzbar und dem Gas aussetzbar ist,
- wobei der Einbaukörper (10) mehrlagig ausgebildet ist und eine Vielzahl von aneinanderliegenden, von einem Rand (14,16) begrenzten, gewellten Plattenelementen (12) aufweist, die mit Erhebungen und Vertiefungen versehen sind,
- wobei sich jeweils aneinanderliegende Plattenelemente (12) an ihren Erhebungen kontaktieren,
- wobei der Einbaukörper (10) in mindestens einer Lage (13) mehrere nebeneinanderliegende Plattenelemente (12) aufweist, deren Ränder (14,16) einander gegenüberliegen, und
- wobei die gegenüberliegenden Ränder (14,16) jeweils zweier nebeneinanderliegender Plattenelemente (12) der mindestens einen Lage (13) von einem Plattenelement (12) der benachbarten Lage (13) des Einbaukörpers (10) überdeckt sind.

9. Einbauelement nach Anspruch 8, **dadurch gekennzeichnet, dass** die Plattenelemente (12) jeweils Längs- und Querränder (14,16) aufweisen und dass benachbarte Plattenelemente (12) einer Lage (13) jeweils mit ihren Längsrändern (14) und/oder mit ihren Querrändern (16) einander gegenüberliegend angeordnet sind.

10. Einbauelement nach Anspruch 8 oder 9, **dadurch gekennzeichnet, dass** die aneinanderliegenden Plattenelemente (12) benachbarter Lagen (13) des Einbaukörpers (10) durch Steck- oder Rastverbindungen oder durch Zapfen-Loch- oder Nietverbindungen mit Kalt- oder Warmverformung des die Verbindung herstellenden Materials aneinander gegen Scherkräfte gesichert fixiert sind und/oderdass der Einbaukörper (10) in Richtung der Aufeinanderfolgende der Lagen (13) von Plattenelementen (12) verlaufende Zusammenhaltestangen (17) aufweist, die sich durch aneinanderliegende Plattenelemente (12) erstrecken.

11. Einbauelement nach einem der Ansprüche 8 bis 10, **dadurch gekennzeichnet, dass** der Einbaukörper (10) durch die Ränder (14,16) der Plattenelemente (12) gebildete durchgehende Seitenflächen sowie durch die Plattenelemente (12) der Außenlagen (13) gebildete Ober- und Unterseiten (11,15) aufweist und dass (i) die Strömungseingangs- und Ausgangsseiten (24,26) von zwei gegenüberliegenden Seitenflächen des Einbaukörpers (10) gebildet sind, wobei der Einbaukörper (10) von seiner Oberseite (11) aus mit Flüssigkeit versorgbar ist, die den Einbaukörper (10) quer zur Gasströmung und unter Benetzung der Plattenelemente (12) durchzieht, oder (ii) die Strömungseingangsseite von der Unterseite (15) des Einbaukörpers (10) und die Strömungsausgangsseite von der Oberseite (11) des Einbaukörpers (10) gebildet ist und dass der Einbaukörper (10) von seiner Oberseite (11) aus mit Flüssigkeit versorgbar ist, die den Einbaukörper (10) entgegengesetzt zur Gasströmung und unter Benetzung der Plattenelemente (12) durchzieht.

12. Einbauelement nach einem der Ansprüche 8 bis 11, **dadurch gekennzeichnet, dass** die Plattenelemente (12) perforiert sind und dass (i) die Plattenelemente (12) Gittermatten mit Gitterstäben (38) sind, wobei die Perforationen (40) durch die Freiräume zwischen benachbarten Gitterstäben (38) der Gittermatten gebildet sind, oder (ii) die Plattenelemente (12) Folienelemente sind, in denen die Perforationen (40) ausgebildet sind.

13. Einbauelement nach einem der Ansprüche 8 bis 12, **dadurch gekennzeichnet, dass** sich die Erhebungen (32) und Vertiefungen (34) schräg zu den gegenüberliegenden Rändern (14,16) der Plattenelemente (12) und/oder zwischen diesen wellenförmig, zickzackförmig oder auf andere Weise von einer geradlinigen Erstreckung abweichend verlaufen.

14. Einbauelement nach einem der Ansprüche 8 bis 13, **dadurch gekennzeichnet, dass** die Plattenelemente (12) Papier oder Pappe aufweisen.

15. Einbauelement nach einem der Ansprüche 8 bis 14, **dadurch gekennzeichnet, dass** zwischen mindestens einem Paar von benachbarten Lagen (13) von Plattenelementen (12) ein Stabilisierungsfolienstreifen (19) insbesondere aus Kunststoff angeordnet ist.

## Claims

1. Method for the assembly of an installation body for a device for the humidification, purification and/or cooling of a fluid, in particular a gas such as e.g. air, in which
- a plurality of corrugated film or grating plate elements (12) with protrusions and depressions are positioned on a support surface (52) to form a plate element stack (50, 50', 50", 50"') of plate elements (12) arranged side by side and, with an offset, above each other,
- from below and starting from the support surface, further plate elements (12) are placed against the plate element stack (50, 50', 50", 50"') thus constructed, the further plate elements being placed successively against the plate elements (12) of the plate element stack (50, 50', 50", 50"') built so far, and
- the plate element stack (50, 50', 50", 50"') is cut to plate element blocks (62) of desired length from plate elements (12) arranged side by side and, with an offset, above each other.

2. Method of claim 1, **characterized in that** reinforcing film strips (19) are placed between two adjacent plate elements (12), arranged one above the other, in the lower portion of the plate element stack (50, 50', 50", 50"') facing the support surface (52), as well as in the upper portion of the plate element stack (50, 50', 50", 50"') averted from the support surface (52).

3. Method of claim 1 or 2, **characterized in that**, during the building of the plate element stack (50, 50', 50", 50"'), the reinforcing film strips (19) are placed between the two plate elements (12) of two respective pairs of plate elements (12) arranged one above the other with an offset.

4. Method of any one of claims 1 to 3, **characterized in that** individual plate elements (12) are respectively arranged one above the other and side by side with an offset.

5. Method of any one of claims 1 to 3, **characterized in that** a plurality of plate elements (12) is respectively arranged aligned one above the other to form plate element groups, and the plate element groups thus obtained are arranged one above the other and side by side with an offset to form the plate element stack (50, 50', 50", 50"').

6. Method of any one of claims 1 to 5, **characterized in that** the plate elements (12) are arranged offset to form a step-shaped offset of the plate element stack (50, 50', 50", 50"').

7. Method of any one of claims 1 to 6, **characterized in that** the plate elements (12) or groups of plate elements (12) are arranged alternately offset, so that, seen over the height of the plate element stack (50, 50', 50", 50"'), every second plate element (12) or every second group of plate elements (12) is arranged in mutual alignment.

8. Installation element for installation in a device for the humidification, purification and/or cooling of a fluid, in particular a gas such as e.g. air, comprising
- an installation body (10) adapted to be wetted with a liquid, in particular water, obtained by a method according to one of the preceding claims, the installation body being adapted to be flown through by a gas, in particular air, and comprising a flow inlet side, as well as a flow outlet side, and being provided with regions between these sides, which are adapted to be wetted by the liquid and to be exposed to the gas,
- wherein the installation body (10) is of a multilayer structure and comprises a plurality of abutting corrugated plate elements (12) delimited by an edge (14, 16), said plate elements being provided with protrusions and depressions,
- wherein respective abutting plate elements (12) contact each other at their protrusions,
- wherein, in at least one layer (13), the installation body (10) comprises a plurality of adjoining plate elements (12), whose edges (14, 16) oppose each other, and
- wherein the opposing edges (14, 16) of two respective adjoining plate elements (14, 16) of the at least one layer (13) are covered by a plate element (12) of the adjacent layer (13) of the installation body (10).

9. Installation element of claim 8, **characterized in that** the plate elements (12) each comprise longitudinal and transversal edges (14, 16), and that adjacent plate elements (12) of one layer (13) are arranged so as to respectively oppose each other at their longitudinal edges (14) and/or their transversal edges (16).

10. Installation element of claim 8 or 9, **characterized in that** the contiguous plate elements (12) of adjacent layers (13) of the installation body (10) are fixed at each other in a manner secured against shear forces by plug or snap connections or by peg-and-hole or rivet connections with cold or hot forming of the material making the connection, and/or that the installation body (10) comprises tie bars (17) which extend in the direction of the succession of the layers (13) of plate elements (12) and through abutting plate elements (12).

11. Installation element of any one of claims 8 to 10, **characterized in that** the installation body (10) comprises continuous side surfaces formed by the edges (14, 16) of the plate elements (12), as well as upper and lower sides (11, 15) formed by the plate elements (12) of the outer layers (13), and that (i) the flow inlet and outlet sides (24, 26) are formed by two opposite side surfaces of the installation body (10), wherein the installation body (10) is adapted to be supplied with liquid from its upper side (11), which liquid traverses the installation body (10) in a direction transverse to the gas flow while wetting the plate elements (12), or (ii) the flow inlet side is formed by the lower side (15) of the installation body (10) and the flow outlet side is formed by the upper side (11) of the installation body (10), and that the installation body (10) is adapted to be supplied with liquid from its upper side (11), which liquid traverses the installation body (10) in a direction opposite to the gas flow while wetting the plate elements (12).

12. Installation element of any one of claims 8 to 11, **characterized in that** the plate elements (12) are perforated and that (i) the plate elements (12) are grid mats with grid bars (38), wherein the perforations (40) are farmed by the free spaces between adjacent grid bars (38) of the grid mats, or (ii) the plate elements (12) are film elements in which the perforations (40) are formed.

13. Installation element of any one of claims 8 to 12, **characterized in that** the protrusions (32) and the depressions (34) extend obliquely with respect to the opposite ends (14, 16) of the plate elements (12) and/or extend between the same in an undulated shape, a zigzag shape or in another manner different from a straight extension.

14. Installation element of any one of claims 8 to 13, **characterized in that** the plate elements (12) comprise paper or cardboard.

15. Installation element of any one of claims 8 to 14, **characterized in that** a stabilizing film strip (19), in particular of plastic material, is arranged between at least one pair of adjacent layers (13) of plate elements (12).

## Revendications

1. Procédé pour l'assemblage d'un corps intégré pour un dispositif d'humidification, de purification et/ou de refroidissement d'un fluide, en particulier des gaz tels que p. ex. l'air, où
- sont positionnés plusieurs éléments de plaque (12) en feuilles ou en grilles ondulés dotés d'élévations et de dépressions sur une surface portante (52) afin de former une pile d'éléments de plaque (50, 50', 50", 50"') à partir d'éléments de plaque (12) disposés contigus et superposés en décalage,
- sur la pile d'éléments de plaque (50, 50', 50", 50"') ainsi formée, d'autres éléments de plaque (12) commençant en dessous et au-dessus de la surface portante sont mis en place pour être contigus sur les éléments de plaque (12) de la pile d'éléments de plaque (50, 50', 50", 50"') créée jusqu'à ce point et
- la pile d'éléments de plaque (50, 50', 50", 50"') formée d'éléments de plaque (12) agencés pour être contigus et superposés en décalage est découpée en blocs d'éléments de plaques (62) de la longueur désirée.

2. Procédé selon la revendication 1, **caractérisé en ce que** des bandes de feuilles de renfort (19) sont insérées entre deux éléments de plaque (12) contigus et superposés, dans la zone inférieure tournée vers la surface portante (52) de la pile d'éléments de plaque (50, 50", 50", 50"') ainsi que dans la zone supérieure écartée de la surface portante (52) de la pile d'éléments de plaque (50, 50', 50", 50"').

3. Procédé selon la revendication 1 ou 2, **caractérisé en ce que** les bandes de feuilles de renfort (19) sont insérées pendant la construction de la pile d'éléments de plaque (50, 50', 50", 50"') entre les deux éléments de plaques (12) de deux paires d'éléments de plaque (12) agencés pour être superposés en décalage.

4. Dispositif selon l'une des revendications 1 à 3, **caractérisé en ce que**, respectivement, certains éléments de plaque (12) sont disposés superposés et contigus en décalage.

5. Dispositif selon l'une des revendications 1 à 3, **caractérisé en ce que**, respectivement, plusieurs éléments de plaque (12) sont disposés superposés en alignement l'un sur l'autre en groupes d'éléments de plaque et les groupes d'éléments de plaque ainsi obtenus sont disposés contigus et superposés en décalage pour former une pile d'éléments de plaque (50, 50', 50", 50"').

6. Procédé selon l'une des revendications 1 à 5, **caractérisé en ce que** les éléments de plaque (12) sont disposés décalés pour former un décalage en escalier de la pile d'éléments de plaque (50, 50', 50", 50"').

7. Procédé selon l'une des revendications 1 à 6, **caractérisé en ce que** les éléments de plaque (12) ou les groupes d'éléments de plaque (12) sont disposés tour à tour en décalage, de sorte que sur la hauteur de la pile d'éléments de plaque (50, 50', 50", 50"') tous les deuxièmes éléments de plaque (12) ou tous les deuxièmes groupes d'éléments de plaque (12) sont disposés en alignement les uns avec les autres.

8. Élément de corps intégré pour corps intégré dans un dispositif d'humidification, de purification et/ou de refroidissement d'un fluide, en particulier des gaz tels que p. ex. l'air, doté
- d'un corps intégré (10) mouillable avec un fluide, en particulier de l'eau, obtenu par un procédé selon une des revendications précédentes, pouvant être parcouru par un gaz, en particulier de l'air et qui comporte un côté d'entrée du flux ainsi qu'un côté de sortie du flux et est pourvu entre ces deux côtés de zones mouillables par le fluide et exposables au gaz,
- dans lequel le corps intégré (10) est conçu avec plusieurs couches et comporte une pluralité d'éléments de plaque (12) ondulés qui sont prévus dotés d'élévations et de dépressions, adjacents les uns aux autres et délimités par un bord (14, 16), - dans lequel les éléments de plaque (12) contigus sont respectivement en contact sur leurs élévations,
- dans lequel le corps intégré (10) comporte dans au moins une couche (13) plusieurs éléments de plaque (12) placés les uns à côté des autres, dont les bords (14, 16) sont situés opposés l'un à l'autre, et
- dans lequel les bords (14, 16) opposés l'un à l'autre de deux éléments de plaques (12) placés respectivement l'un à côté de l'autre de la au moins une couche (13) sont recouverts par un élément de plaque (12) de la couche (13) voisine du corps intégré (10).

9. Élément de corps intégré selon la revendication 8, **caractérisé en ce que** les éléments de plaque (12) comportent respectivement des bords longitudinaux et transversaux (14, 16) et **en ce que** les éléments de plaque (12) voisins d'une couche (13) sont agencés respectivement opposés l'un à l'autre avec leurs bords longitudinaux (14) et/ou avec leurs bords transversaux (16).

10. Élément de corps intégré selon la revendication 8 ou 9, **caractérisé en ce que** les éléments de plaque (12) adjacents l'un à l'autre de couches voisines (13) du corps intégré (10) sont fixés l'un à l'autre contre des forces de cisaillement par des raccords enfichables ou encliquetables ou par des raccords tenon-mortaise ou des jointures rivetées par formage à froid ou à chaud du matériau formant le raccord et/ou **en ce que** le corps intégré (10) comporte des tringles de fixation (17) s'étendant dans la direction de la succession des couches (13) des éléments de plaques (12) au travers d'éléments de plaques (12) contigus.

11. Élément de corps intégré selon l'une des revendications 8 à 10, **caractérisé en ce que** le corps intégré (10) comporte des surfaces latérales continues formées par les bords (14, 16) des éléments de plaque (12) ainsi que des surfaces supérieures et inférieures (11, 15) formées par les éléments de plaque (12) des couches externes (13) et **en ce que** (i) les côtés d'entrée du flux et de sortie du flux (24, 26) sont formées par deux faces latérales opposées l'une à l'autre du corps intégré (10), dans lequel le corps intégré (10) est alimentable par sa face supérieure (11) en fluide, qui traverse le corps intégré (10) transversalement au flux de gaz et en utilisant les éléments de plaque (12), ou (ii) le côté d'entrée du flux est formé par de la face inférieure (15) du corps intégré (10) et le côté de sortie du flux est formé par de la face supérieure (11) du corps intégré (10) et **en ce que** le corps intégré (10) est alimentable par sa face supérieure (11) en fluide, qui traverse le corps intégré (10) à contre-courant du flux de gaz et en utilisant les éléments de plaque (12).

12. Élément de corps intégré selon l'une des revendications 8 à 11, **caractérisé en ce que** les éléments de plaque (12) sont perforés et **en ce que** (i) les éléments de plaque (12) sont des nattes grillagées dotées de barreaux de grille (38), dans lequel les perforations (40) sont formées par les espaces libres entre des barreaux (38) voisins des nattes grillagées, ou (ii) les éléments de plaque (12) sont des éléments de feuilles, au sein desquels les perforations (40) sont formées.

13. Élément de corps intégré selon l'une des revendications 8 à 12, **caractérisé en ce que** les élévations (32) et les dépressions (34) sont obliques aux bords (14, 16) opposés des éléments de plaque (12) et/ou s'étendent entre ceux-ci de manière ondulée, en zigzag ou dévient d'une étendue droite d'une autre manière.

14. Élément de corps intégré selon l'une des revendications 8 à 13, **caractérisé en ce que** les éléments de plaque (12) comportent du papier ou du carton.

15. Élément de corps intégré selon l'une des revendications 8 à 14, **caractérisé en ce qu'**une bande de feuille de stabilisation (19), en particulier en plastique, est disposée entre au moins une paire de couches (13) voisines d'éléments de plaque (12).
